# DEMANDE DE BREVET EUROPEEN

(11) **EP 2 073 433 A1**
(43) Date de publication de la demande: **24.06.2009**
(21) Numéro de dépôt: 08021318.4
(22) Date de dépôt: 09.12.2008
(51) Int. Cl.: H04L 9/32

(54) **Sécurisation déportée de transactions radiofréquences UHF de contrôle et identification**

(30) Priorité: 18.12.2007 FR 0708808
(71) Demandeur: Systemes Et Technologies Identification, 13850 Greasque (FR)
(72) Inventeur: Poitrat, Sylvain, 13850 Greasque (FR); Mugnier, Eric, Hervé, 13170 Les Pennes Mirabeau (FR); Larrera de Morel, Pierre-Antoine, Claude, Marie, 83640 Saint-Zacharie (FR)
(74) Mandataire: Pouillot, Laurent Pierre Paul

(57) **Abrégé**

L'invention concerne la sécurisation de transactions radiofréquence UHF, au sein d'une installation (1) comportant un transpondeur (10) pourvu d'un composant passif (12) dont la zone mémoire est à lecture libre ; ce procédé comportant une procédure d'authentification du transpondeur (10), suivie d'une procédure de décryptage de données utiles, qui sont déportées via un lecteur (9).

La procédure déportée d'authentification recourt à un condensat d'authentification sous la forme d'un code d'authentification de message, obtenu par hachage des données utiles en fonction d'une clé secrète d'authentification ; tandis que la procédure déportée de décryptage emploie une clé de décryptage secrète de longueur tronquée et une valeur générée.

## Description

L'invention vise le domaine des transactions radiofréquences d'identification (RFID), par exemple pour des applications de contrôle d'accès. Les transactions concernées ici sont généralement dans les bandes de fréquences comprises entre 100 MHz et 10 GHz, c'est-à-dire dans la plage des Ultra Hautes Fréquences (UHF) et Super Hautes Fréquences (SHF).

Actuellement, des normes standardisent les interfaces RFID dans le domaine des objets, en fonction de la gamme de radiofréquence utilisée. Ainsi, la norme ISO18000-6 définit des paramètres de communication UHF d'une interface d'air entre 860 MHz et 960 MHz. Ce sont typiquement des transactions régies par cette norme qui sont évoquées ici.

L'invention propose d'apporter de la sécurité à des transactions RFID-UHF, lorsque les composants électroniques liés à un objet que l'on désire identifier et contrôler ne possèdent matériellement pas de telles fonctions sécuritaires de manière native.

Avant de décrire l'invention, certains termes et expressions méritent d'être expliqués ou précisés.

D'abord, soulignons que le terme objet est à comprendre au sens large. De sorte qu'il désigne ici indifféremment un bien, un animal ou encore une personne humaine à identifier / contrôler.

Qu'il s'agisse de radiofréquences UHF ou d'une autre gamme, la technologie RFID permet l'identification d'un ou plusieurs de ces objets par la lecture à distance d'informations.

Si nécessaire, la lecture s'opère à travers certaines matières telles qu'un conditionnement (e.g. un emballage) ou un moyen de transport (e.g. le pare-brise d'une automobile ou un bac de transport en unité de traitement / production).

Typiquement, une installation RFID comporte plusieurs éléments :
- des transpondeurs tels que des étiquettes ou badges, qui sont solidaires de l'objet à identifier ;
- des lecteurs aptes à opérer des transactions, en lecture et / ou écriture avec ces transpondeurs ;
- et des systèmes informatiques (serveurs, plateformes, etc.) équipés de logiciels d'application (gestion des contrôles, identifications, traçabilité, comptages, etc.)

Les transpondeurs RFID sont des dispositifs matériels, également appelés étiquettes électroniques (en anglais Tags).

Ils comportent en général un composant ou puce électronique, une antenne et un conditionnement tel qu'un boitier ou un substrat d'étiquette. C'est par l'intermédiaire de ce conditionnement que le transpondeur est rendu solidaire de l'objet à identifier et / ou contrôler.

Il existe deux familles de transpondeurs RFID :
- les transpondeurs actifs, c'est-à-dire pourvus d'une source propre d'alimentation en courant électrique telle qu'un accumulateur ; et
- les transpondeurs passifs auxquels l'énergie est fournie par voie radiofréquence depuis le lecteur.

Avec un transpondeur passif, la puissance de calcul qu'est capable de fournir la puce embarquée dans le transpondeur et la puissance d'émission sont réduites.

Classiquement, les transpondeurs RFID sont utilisés pour des contrôles d'accès, de la traçabilité, des inventaires ou simplement de l'identification. Les transpondeurs RFID-UHF remplacent souvent des codes-barres, et procurent de nombreux avantages par rapport à ces derniers.

Ainsi, la distance de transaction RFID-UHF maximale séparant un transpondeur et un lecteur peut être bien plus importante que dans les systèmes à haute fréquence (HF), en particulier ceux qui travaillent à 13,56 MHz.

Typiquement, une portée maximale de l'ordre de plusieurs mètres, par exemple 10 mètres, est possible lors d'une transaction RFID-UHF.

Egalement, les vitesses maximales de déplacement d'un objet à identifier, auxquelles une transaction RFID-UHF est possible sont exceptionnellement élevées.

Par exemple, dans le cas où l'objet est un véhicule, celui-ci peut être identifié à plusieurs dizaines voire à plus de cent cinquante kilomètres à l'heure (Km/h).

Ceci explique le choix du RFID-UHF lorsque ces distances et vitesses sont des critères prépondérants

Ainsi, les fréquences UHF sont exploitées en champ lointain. La distance maximale de détection à atteindre étant très supérieure à la longueur d'onde, le principe physique fondamental de propagation d'ondes est utilisé.

Les avantages par rapport aux transactions en champs proche avec couplage inductif c'est-à-dire magnétique, sont notamment les distances et débits possibles, et les dimensions réduites des antennes.

Mais avec les fréquences UHF employées en champ lointain, la propagation est telle que le champ électromagnétique diminue en fonction de l'inverse de la distance de transaction.

Tandis que l'énergie reçue au transpondeur est fonction de l'inverse du carré de cette distance.

Donc, le choix des radiofréquences UHF à propagation en champ lointain limite la distance de transaction à sensiblement une dizaine de mètres, sauf à employer des transpondeurs actifs. Ceci est exclu par certaines normes dont ISO18000-6.

En outre, de tels systèmes UHF lointains sont d'une mise au point délicate du fait des interférences notamment.

Tandis qu'avec de tels transpondeurs UHF passifs, du fait de la faible puissance d'émission disponible, la fiabilité des transactions et la pénétration des ondes radiofréquences dans des matériaux entourant les antennes sont moindres.

Enfin, pour être commercialement exploitables les transpondeurs UHF passifs doivent intégrer une puce électronique de structure simple.

Avec les technologies actuelles, les limitations des transpondeurs UHF passifs sont les suivantes :
- Surface du composant : en pratique la taille limite d'une telle puce est de 1 mm². Ses circuits sont composés de portes NAND, dont le nombre est estimé entre 10.000 et 20.000 pour 1 mm². Notons d'ores et déjà qu'il en faut 5.000 pour assurer une protection numérique selon les méthodes les plus minimalistes, ce qui équivaudrait à 0,25 mm².
- L'énergie : avec des transpondeurs UHF passifs, l'énergie est fournie par le signal de lecture. Plus la fréquence est élevée, plus la puissance délivrée est faible.

A cet égard, on estime à ce jour que sensiblement 20 µA peuvent être fournis à un transpondeur. Mais seulement 10 µA peuvent être utilisés pour la protection numérique.

Il existe en théorie trois façons d'augmenter cette puissance : des fréquences de transmission plus basses, une puissance de transmission plus forte ou une antenne plus grande.

Cependant, ces trois paramètres sont imposés, soit par les règlements, soit par le cahier des charges du transpondeur.

Une autre des limitations des transpondeurs UHF passifs vise l'horloge de son composant qui doit être compatible avec les temps de transactions prescrits.

Ceux-ci peuvent être particulièrement brefs, comme dans le cas d'un télépéage autoroutier.

Ici encore, on comprend que l'intégration à la transaction de procédures de sécurité augmente la durée des transactions, en pratique de manière rédhibitoire si des procédures calquées sur les transpondeurs HF sont envisagées.

Dans ce contexte, sans mécanisme de sécurité, il est relativement aisé d'écouter avec une antenne à haut gain les étiquettes liées à un objet donné.

Ceci représenterait une menace pour la sécurité des entreprises, car de tels transpondeurs sont au coeur du contrôle d'accès, de la production et de la chaîne logistique.

Les deux principales menaces sont l'écoute illégale des transpondeurs et leur duplication ou clonage.

De ce fait, selon le niveau de sécurité souhaité, les transpondeurs RFID actuels sont passifs ou actifs. Et les solutions de sécurité physiques, logiques, voire cryptographiques pour une forte protection. Mais il faut trouver un compromis entre coût, fiabilité et complexité des techniques implémentées.

On vient de voir qu'il existe de fortes contraintes (surface composant, énergie et antenne notamment) qui ont jusqu'à présent empêché l'apparition massive des transpondeurs UHF passifs à même de mettre en oeuvre une cryptographie sécuritaire.

Bien qu'il existe des solutions non cryptographiques pour protéger des transactions RFID-UHF, celles-ci ne sont pas utilisables dans la plupart des cas pratiques.

Ainsi en est-il des solutions basées sur le principe de la cage de Faraday. Le brouillage est une autre solution de protection difficilement envisageable notamment pour un contrôle d'accès en RFID-UHF.

Certains systèmes de sécurité prévoient de coupler au transpondeur un dispositif de blocage apte à simuler le comportement du transpondeur à protéger, pour prévenir toute transaction inacceptable avec lui.

Ces systèmes n'ont pas non plus été implémentées sur les marchés majeurs, pour des questions de coût, de complexité et de compatibilité avec les besoins propres à la transaction (bouclier rendant le transpondeur inutilisable).

Reste donc en théorie les solutions cryptographiques de protection des transactions RFID-UHF. Mais on a déjà vu qu'elles ne semblent pas utilisables en pratique.

En effet, bien que ce type de sécurité soit fondé sur des fonctionnalités logiques, l'exécution de ces dernières implique que la puce possède des moyens physiques suffisants, notamment en termes d'accessibilité aux données du transpondeur et en capacité de traitement par celui-ci.

Ceci existe pour sécuriser des transactions RFID (hors UHF bien sûr), où par exemple le lecteur effectue une authentification du transpondeur (si ses propriétés natives le permettent) par synchronisation.

Par exemple, dans la gamme HF à 13,56 MHz, on produit à la place de l'identifiant "ID" classique du transpondeur, une valeur ou clé secrète "VS".

Quand un lecteur interroge le transpondeur, celui-ci exécute une fonction de hachage G pour répondre avec la valeur : ID=G(VS). Également, une fonction de hachage H est exécutée pour calculer une nouvelle valeur secrète VS+1. Une base de données contient le couple (VS, ID) et une procédure calcule ID'=G (Hi(VS)) jusqu'à trouver ID'=ID.

Cette solution dite à clé secrète, bien qu'efficace, ne convient pas en pratique aux transactions RFID-UHF. En effet la gestion des secrets doit être assurée par le transpondeur, et les puces RFID-UHF dédiées à ces transactions n'en possèdent pas les moyens.

En outre, lorsque les impératifs de sécurité sont d'un plus haut niveau, un chiffrement ou encryption des données échangées entre le lecteur et le transpondeur est également prévu dans le cas de certaines transactions RFID (toujours hors UHF). Ceci assure la confidentialité des données échangées.

Mais on considère qu'avec les technologies actuelles, sur les 10.000 à 20.000 portes logiques dont est dotée un pareil transpondeur RFID-UHF, environ 5.000 devraient être dédiées au chiffrement, ainsi que la moitié des 20 µA d'énergie disponibles. De plus, l'opération devrait être exécutée sur environ 1.000 cycles d'horloge à 100 kHz, ce qui n'est pas compatible avec les durées de transactions courantes en RFID-UHF.

C'est à ces conditions physiques qu'une méthode cryptographique classique pourrait être implémentée en pratique. Ce qui est impossible avec les transpondeurs RFID-UHF actuels.

Citons maintenant divers documents de l'art antérieur, relatifs aux questions de sécurité dans le domaine des transactions, notamment RFID.

Le document US20070133807A1 décrit une authentification d'étiquette électronique pour un système RFID (typiquement dans la gamme HF à 13,56 MHz). Cette authentification accomplit une résolution rapide des problèmes d'identité en employant un algorithme de hachage. Une information secrète ainsi que des données secrètes de groupe sont enregistrées dans la mémoire de l'étiquette. Une base de données emmagasine ces informations, afin que l'authentification soit effectuée rapidement et sans dégrader les fonctions de sécurité.

Le document « Handbook of applied cryptography » (XP 002484955, 1997) décrit les concepts et la terminologie basique employés en cryptologie appliquée. Il expose des généralités sur l'encryption des domaines et leur restitution, ainsi que l'obtention concrète de la confidentialité. Les fonctions classiques de hachage et leur classification sont ensuite exposées. L'application d'autres fonctions de hachage classiques, pour la confirmation de connaissance, la dérivation de clé ou la génération de nombres pseudo-aléatoire, est évoquée. Des exemples de formatage et d'initialisation sont décrits. La notion d'identification forte est enfin abordée.

Le document EP 1 806 869 décrit un appareil de communication qui exécute des procédures anticollision, dans le cas notamment de la lecture simultanée d'un nombre important d'étiquettes électroniques, comme dans les systèmes RFID qui utilisent une réflexion modulée dans la bande UHF. Un objectif est d'empêcher des tiers de connaitre les données transférées. Pour l'authentification, dans une période préalable à une première tranche de temps, des données d'évaluation sont transmises. Après la première période de temps, intervient une tranche où on répond aux données d'évaluation. Les tranches de temps sont segmentées. Ainsi, les données de réponse peuvent être transmises durant l'échange de données d'évaluation sont encore en cours d'échange.

Le document US 2006 174 129 décrit une méthode d'authentification pour des articles marqués d'une étiquette électronique. Avant transfert des articles, une identification associée à l'étiquette est déterminée, et les identifiants subissent un hachage pour créer une synthèse compacte. Après transfert des articles, une détermination d'identifiant est opérée, pour exécuter une vérification par concordance avec la synthèse compacte, afin de signifier un changement au sein d'un récipient contenant les articles.

Le document « Federal Information Processing Standards Publication 197, November 26, 2001, ADVANCED ENCRYPTION STANDARD (AES) » (FIPS197) expose une norme avancée de cryptographie pour assurer la confidentialité de transactions. Cette norme propose un algorithme symétrique à clé secrète, qui convertit des données sous une forme inintelligible à l'aide de clés de 128 à 256 bits.

Le document « Federal Information Processing Standards Publication 198 ; March 6, 2002 ; The Keyed-Harsh Message Authentication Code (HMAC) » (FIPS198) expose une norme d'authentification. Au chapitre 3 relatif aux clés cryptographiques employées pour cette d'authentification, est préconisée une longueur minimale de clé. Au chapitre 4 relatif aux signatures de sortie tronquées (ou « Truncated Output »), est proposée une réduction de signature limitée aux 10 premiers octets.

Le document « Federal Information Processing Standards Publication 180-2 ; 2002 August, 1 ; Secure Hash Standard », (FIPS180-2) propose un algorithme nommé SHA-1 (Secure Hash Algorithm), c'est-à-dire une fonction de hachage cryptographique d'authentification.

Cette fonction produit un résultat (appelé « hash » ou condensat). L'objectif de l'algorithme SHA-1 est de calculer une représentation condensée des données électroniques à transmettre. La longueur d'un condensé obtenu via SHA-1 est normalement de 160 bits. Cet algorithme peut être découpé en deux phases successives : le prétraitement, puis le calcul du condensé.

C'est dans ce contexte fortement contraignant, que l'invention propose d'apporter de la sécurité à des transactions passive RFID-UHF avec couplage électromagnétique, lorsque les composants électroniques liés à un objet que l'on désire identifier et contrôler n'en possèdent matériellement pas les moyens de manière native.

A cet effet, un premier objet de l'invention vise un procédé de sécurisation de transaction radiofréquence UHF/SHF, au sein d'une installation comportant au moins : un transpondeur couplé à un objet à identifier et un lecteur apte à opérer la transaction ; ce dernier étant pourvu d'un composant passif dont la zone mémoire est à lecture libre ; ce procédé comporte une procédure d'authentification du transpondeur, suivie d'une procédure de décryptage de données utiles de la zone mémoire.

Selon l'invention, ce procédé est tel que ces procédures d'authentification et de décryptage sont déportées via le lecteur ; la procédure d'authentification prévoit d'abord la lecture dans la zone mémoire d'un marqueur propre au composant passif d'une part, et d'autre part la lecture d'un condensat d'authentification sous la forme d'un code d'authentification de message, obtenu par hachage des données utiles en fonction d'une clé secrète d'authentification ; puis la procédure d'authentification prévoit la comparaison des valeurs lues des marqueurs et condensats ; si cette procédure d'authentification est validée par le lecteur, celui-ci autorise une lecture des données confidentielles obtenues à l'aide d'une clé d'encryption secrète de longueur tronquée et d'une valeur générée, puis opère le décryptage des données utiles.

Dans une mise en oeuvre, les procédures d'authentification et de décryptage déportées via le lecteur comportent respectivement des chiffrage et encryptage ; par exemple un encodage préalable de transpondeur pour la configuration d'un lecteur et / ou d'échange de clés est opéré par un système informatique.

Selon une réalisation, la lecture dans la procédure d'authentification comporte celle d'un marqueur de détection du type de transpondeur, par exemple de configuration, d'échange de clés ou pour utilisateur, et celle d'un identifiant unique (UID / TID) et / ou code électronique (EPC) propre au comportant passif, par exemple en amont de celle du marqueur.

Dans une mise en oeuvre, préalablement à la procédure d'authentification, le hachage du code d'authentification de message est produit à l'aide d'une signature réduite sensiblement aux 10 à 20 premiers octets, par exemple selon les normes HMAC (FIPS198) et SHA-1 (FIPS180-2), et est suivi par l'enregistrement en zone mémoire du transpondeur du condensat correspondant.

Selon une mise en oeuvre, la procédure de décryptage recourt à un encryptage avancé avec une clé d'encryption de longueur limitée à 16 à 32 octets qui possède au moins six à douze octets communs avec ceux de la clé d'authentification.

Dans une réalisation, la procédure de décryptage comporte une étape de subdivision en blocs d'un message à identifier issu du transpondeur, chaque bloc étant ensuite encrypté séparément en formant un dictionnaire de codes, ce chiffrage étant opéré sans vecteur initial et avec ajout d'au moins une valeur générée suite à l'étape de subdivision, cette valeur générée étant encryptée conjointement au bloc et est au moins un octet aléatoire.

Suivant une réalisation, la procédure de décryptage comporte une étape de substitution non linéaire de bits, puis une étape de transposition de rangées, suivie par une étape de mélange de colonnes et une étape ultérieure de combinaison de bits, par exemple selon la norme AES (FIPS197).

Selon l'invention, ce procédé est destiné à assurer une sécurisation dans le cadre d'une application : de contrôle d'objets, par exemple afin d'autoriser ou interdire un accès, par exemple dans le domaine de l'accès de personnes à un lieu donné ou de véhicules comme dans le cas d'un télépéage ; et/ou de traçabilité d'objets critiques, par exemple de biens de valeurs, par exemple dans le domaine de la fabrication ou du transport de produits de valeur ; et/ou de configuration d'une installation d'identification de manière sécurisée, par exemple dans les domaines précédents.

Un autre objet de l'invention est un transpondeur RFID apte à mettre en oeuvre le procédé d'identification évoqué. Ce transpondeur est compatible avec la norme ISO18000-6 ou la norme EPC1 GEN2 qui définissent des paramètres de communication UHF d'une interface d'air entre 860 MHz et 960 MHz.

Dans une réalisation, ce transpondeur selon l'invention est contenu dans un boîtier, et est destiné à l'identification d'un véhicule à travers une surface vitrée, ce transpondeur comportant une antenne et un composant disposés sur un substrat commun, de manière qu'en utilisation l'antenne soit disposée à une distance sensiblement comprise entre 5 et 16 millimètres de la surface vitrée qui est alors interposée entre le transpondeur et un lecteur compatible.

Encore un autre objet de l'invention est une installation RFID-UHF d'identification sécurisée apte à mettre en oeuvre le procédé évoqué. Cette installation RFID comporte au moins l'un de chacun des éléments suivants : un transpondeur tel qu'étiquette ou badge, destiné à être rendu solidaires d'un objet à identifier ; un lecteur apte à opérer des transactions sécurisées en lecture et / ou écriture avec ce transpondeur ; et un système informatique, tel que serveur ou plateforme, équipé de logiciels d'application par exemple de gestion de contrôles, d'identifications, de traçabilité, de comptage ou analogues.

L'invention est exposée en détails dans la description qui suit, et se réfère aux dessins annexés dans lesquels :
- la figure 1 est une vue schématique d'une installation RFID-UHF selon l'invention, grâce à laquelle un objet (ici un véhicule automobile, représenté par son pare-brise) est autorisé ou interdit d'accès à l'intérieur d'une zone réservée (représentée ici par un portique), lors d'une transaction sécurisée ;
- la figure 2 est un schéma logique illustrant une étape d'authentification selon une encryption d'identification conforme à un mode opératoire spécifique à l'invention, dépourvu de valeurs aléatoires devant être connues de chaque partie ;
- la figure 3 est une représentation schématique d'une clé utilisateur destinée à un badge de configuration, dont la longueur totale de 20 octets est décomposée selon l'invention, avec des octets communs à la clé d'authentification et à la clé d'encryption ;
- la figure 4 est un diagramme logique qui illustre un exemple d'algorithme de transaction sécurisée selon l'invention ;
- les figures 5 et 6 sont des schémas logiques illustrant respectivement un mode d'apport de sécurité où les procédures de décryptage et similairement les procédures d'authentification sont opérées au choix par un lecteur ou par un système informatique .

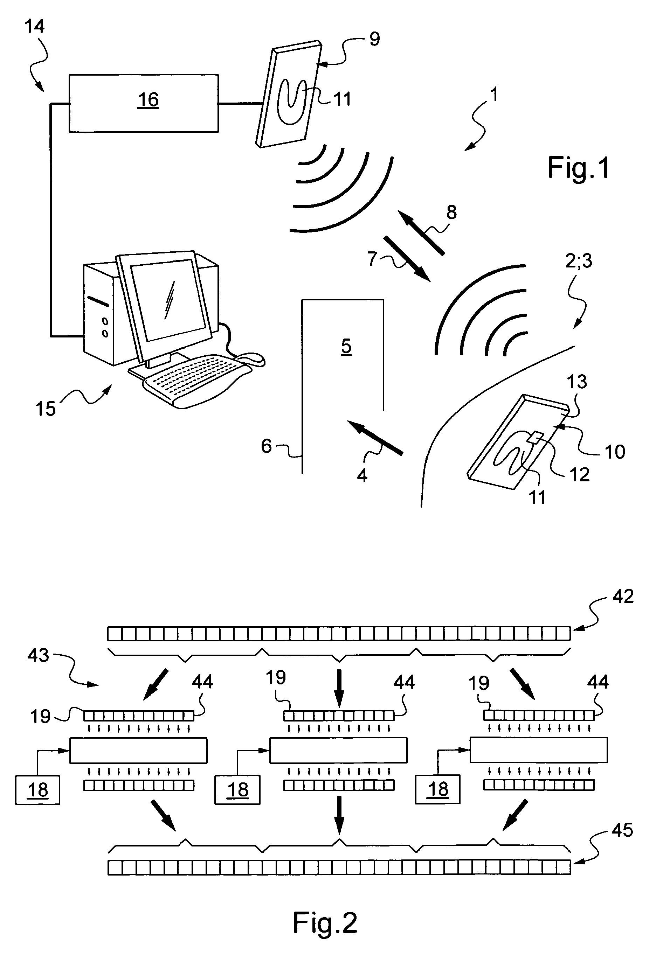

En commençant par se reporter à la figure 1, on voit une installation 1 selon l'invention, de type RFID-UHF. Dans cet exemple, il s'agit d'une installation 1 de contrôle d'accès.

Mais évidemment d'autres domaines ou applications nécessitant une transaction RFID-UHF sécurisée sont tout à fait dans le cadre de l'invention. On verra plus loin d'autres exemples de domaines auxquels l'invention s'applique.

Grâce à cette installation 1, un objet 2 - ici un véhicule automobile représenté par son pare-brise 3 - est identifié afin d'autoriser ou d'interdire son accès 4 à une zone réservée 5 (représentée ici par un portique 6).

Notons encore que par le terme objet, on désigne tout bien matériel ou une personne physique. Par exemple, une personne habilitée à procéder à des configurations de lecteurs ou échanges de clés secrètes, est à considérer ici comme un tel objet, puisque le transpondeur lui est lié.

Cette identification de contrôle de l'accès 4 est opérée lors d'une transaction RFID-UHF désignée schématiquement par les flèches et ondes 7 et 8. Parmi celles-ci, la flèche et les ondes 7 illustrent les transactions UHF depuis un lecteur 9 vers un transpondeur 10.

Évidemment, bien qu'un seul lecteur 9 et un seul transpondeur 10 ait été représentés, l'installation 1 peut comporter une pluralité de lecteurs 9 et/ou de transpondeurs 10.

Inversement, la flèche et les ondes 8 illustrent les transactions UHF depuis le transpondeur 10 vers le lecteur 9.

Il va de soi que les lecteur 9 et transpondeur 10 possèdent chacun une antenne appropriée 11. Classiquement, le transpondeur 10 possède un composant passif 12 (ou puce à mémoire) qui est relié à l'antenne 11 correspondante.

Cette antenne 11 et puce 12 du transpondeur 10 sont disposées ici sur un substrat 13 commun.

C'est usuellement ce substrat 13 qui assure la solidarisation du transpondeur 10 avec l'objet 2 à identifier. Par exemple, ce substrat 13 se présente sous forme de conditionnement (e.g. boîtier ou support d'étiquette).

Au sujet du transpondeur 10, notons qu'il s'agit ici d'un transpondeur 10 passif, c'est-à-dire auquel l'énergie électrique qui lui est nécessaire est fournie par voie radiofréquence (transactions 7), depuis le lecteur 9.

Quant aux transactions 7 et 8, elles sont effectuées en en champ lointain (par exemple à plusieurs mètres, voire dizaine de mètres), et aboutissent à un couplage radiatif ou électromagnétique.

Ici, Les transactions 7 & 8 sont dans les bandes de fréquences Ultra Hautes Fréquences (UHF), par exemple conformes à la norme ISO18000-6, mais aussi aux spécifications EPC de Génération 2. Mais d'autres gammes UHF sont tout à fait conformes à une implémentation de l'invention.

Puisque l'invention ne nécessite que de la mémoire et un marqueur unique, tous les composants possédant ces caractéristiques peuvent servir à son implémentation.

Par exemple, des composants passifs 12 pouvant être utilisé dans le cadre de l'invention sont soit le UCODE EPC Gen2 de NXP (Philips), soit le XRAGen2 de STMicroelectronics. Mais ceci n'est qu'un exemple non limitatif.

Typiquement, les composants 12 employés avec l'invention afin d'animer le transpondeur 10 comportent trois blocs logiques majeurs : une interface analogique radiofréquence, un contrôleur numérique et une zone mémoire effaçable de type EEPROM ; on dit que ces exemples de composants 12 sont « dénués de capacité de calcul », ou l'on parle de « puces à mémoire ».

On dit également que le composant 12 du transpondeur 10 est passif et comporte une zone de mémoire à écriture libre.

En termes de sécurité native, de tels composants 12 possèdent simplement un mécanisme de verrouillage (de protection des écritures) pour des mots de passe individuels, ainsi que des banques individuelles de mémoires pour un statut de verrouillage permanent d'un mot de passe ou de ces banques de mémoire.

Avant de revenir à l'exposé de l'installation 1, notons qu'ici le substrat 13 est ici disposé de manière qu'en utilisation l'antenne 11 soit disposée à une distance sensiblement comprise entre 5 et 16 millimètres de la surface interne au véhicule 2 du pare-brise 3.

Cet agencement assure l'optimisation des performances de la transaction RFID-UHF en termes de distance et de vitesse, tout à permettant le maintien au minimum de l'encombrement de l'objet 2.

On voit sur la figure 1 que l'installation 1 RFID-UHF sécurisée apte à mettre en oeuvre l'invention, comporte en plus du (ou des) transpondeur(s) 10 et du (d'au moins un) lecteur 9, un système informatique 14, ici avec un serveur ou plateforme 15, équipé de logiciels d'application par exemple de gestion de contrôles, d'identifications, de traçabilité, de comptage ou analogues.

On voit de plus sur la figure 1 une interface 16, interposée entre le lecteur 9 et la plateforme 15 et faisant partie du système 14. Classiquement, l'interface 16 est un ordinateur industriel qui assume des traitements locaux à partir de données issues du lecteur 9 et/ou la transmission d'informations vers la plateforme 15.

Typiquement, la plateforme 15 sert à l'enregistrement dans les zones mémoire après calcul localement (hors le transpondeur 10 évidemment), des marqueurs, valeurs et condensats qui seront ensuite lus via le lecteur 9 lors de l'authentification notamment.

Comme annoncé, l'invention apporte de la sécurité à des transpondeurs 10 qui n'en possèdent pas les ressources de manière native. Plus précisément, on obtient avec l'invention une sécurisation des transactions entre le lecteur 9 et le transpondeur 10, d'abord par authentification de ce dernier, puis par encryption des transactions (7 et 8) afin de les rendre confidentielles.

Cependant, on verra que l'installation 1 de l'invention peut être configurée pour qu'un ou plusieurs lecteurs 9 puissent opérer des transactions -mais non sécurisées- avec des transpondeurs compatibles avec les transpondeurs 10 évoqués plus haut. Ceci rend l'installation 1 particulièrement souple, du fait que la sécurité apportée par l'invention ne soit pas tributaire du matériel, mais déportée et logicielle (hormis la lecture des informations sécuritaires enregistrées via le lecteur 9 ou le système 14).

En synthèse, pour assurer cette sécurité, l'invention emploie d'une part une procédure d'authentification et d'autre part une procédure d'encryption (confidentialité).

Une spécificité de l'invention est que ces procédures sont toutes déportées via le lecteur 9, hors du transpondeur 10. Ceci rend plus rapide les transactions, les temps de calcul sur le lecteur 9 ou le système 14 étant bien moindres que ceux opérés sur un transpondeur équipé d'un microprocesseur outre la zone mémoire.

Ces procédures d'authentification et d'encryption impliquent divers mécanismes logiques qui sont décrit plus en détail plus loin.

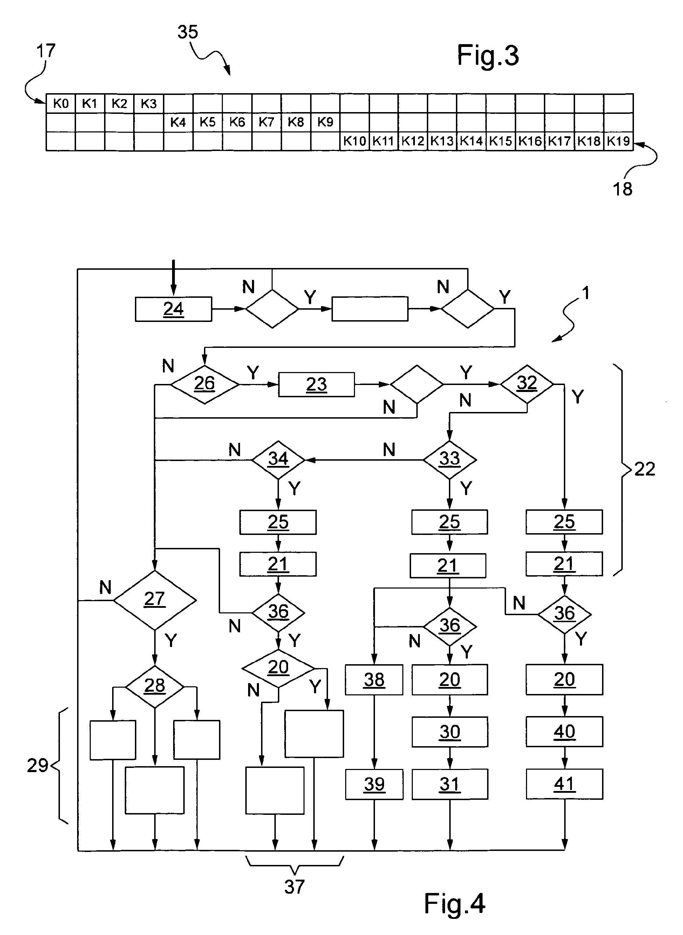

En bref, ces procédures d'authentification et d'encryption (confidentialité) requièrent l'utilisation :
- d'un premier algorithme de hachage avec l'ajout d'une clé secrète d'authentification (17, figure 3) ainsi que d'une donnée unique (UID) propre au transpondeur 10 ;
- d'un second algorithme de chiffrement avec une clé d'encryption (18, figures 2 et 3); et
- d'un mécanisme d'échange sécurisé de ces clés 17 et 18, basé sur la connaissance à priori d'une clé propre à l'installation 1 (c'est-à-dire distincte des clés 17 et 18), ainsi que sur une valeur générée (19, figure 2).

Selon le procédé de l'invention, la procédure d'authentification permet l'identification du transpondeur 10. Classiquement, cette procédure assure simultanément la vérification de l'intégrité des données échangées.

A ces fins, l'authentification opère (en amont de la transaction, en vue de l'enregistrement d'un condensat sur le transpondeur 10) un hachage d'encryption des données d'un code d'authentification de message, en combinaison avec la clé d'authentification 17. Cette clé 17 est secrète et sa longueur est tronquée, En sortie de ce hachage d'identification, est obtenue une signature d'authentification, également de longueur tronquée selon la procédure de l'invention.

L'algorithme d'identification mis en oeuvre ici comporte deux phases (figure 2) : le prétraitement des données et le calcul de hachage. Le prétraitement implique une mise à format ou padding du message 42 initial, le découpage 43 ou parsing de message en un certain nombre de blocs 44, puis l'attribution (setting) de valeurs d'initialisation à employer dans le calcul de hachage. C'est à chaque bloc 44 qu'est adjointe la valeur 19 générée exposée plus loin.

Ce calcul de hachage génère quant à lui une liste opérationnelle ou « message Schedule » à partir du message découpé et recourt à cette liste, ainsi qu'à des fonctions mathématiques, des constantes et des opérations sur des mots, pour générer de manière itérative une série de valeurs de hachage.

La valeur de hachage finalement générée par ce calcul (chiffrement de bloc 18) est utilisée afin de déterminer le condensé ou condensat total 45 (figure 2) du message initial 42.

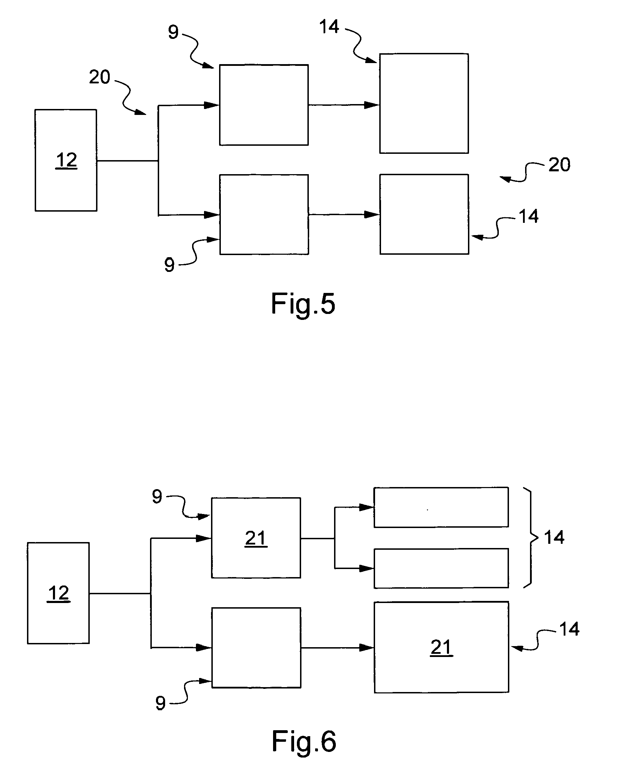

On voit sur les figures 5 et 6 que selon les configurations données à l'invention, les opérations de décryptage 20 de confidentialité en ce qui concerne la figure 5, et de déchiffrage d'authentification 21 en ce qui concerne la figure 6, sont respectivement effectuées au choix par un lecteur 9 ou par un système informatique 14.

Évidemment, lorsque les décryptage 20 et déchiffrage 21 sont effectués par le système 14 (par lecture dans le transpondeur 10 de ses données, signatures et identifiant), c'est néanmoins le lecteur 9 qui assume le transfert des informations entre le système 14 et le transpondeur 10.

De plus, puisque les algorithmes de sécurité mis en oeuvre sont conformes avec des normes et standards, l'installation 1 est ouverte, flexible et personnalisable.

On comprend au vu de la figure 4, que lors d'une transaction sécurisée selon l'invention, le lecteur 9 débute une scrutation RFID-UHF désignée en 24, qui vise à déterminer si oui (Y) ou non (N) un transpondeur 10 est dans le champ. Dans l'affirmative (Y), est opérée une lecture dans ce transpondeur 10, de son code électronique d'identification et la possibilité d'opérer des transactions. Dans la négative (N), la logique de l'installation 1 referme la boucle.

Si une transaction est possible (Y), intervient alors dans le cadre de la procédure d'authentification 21, la lecture 23 dans la zone mémoire d'un transpondeur 10, d'un marqueur propre au composant passif 12.

Selon les cas, ce marqueur est l'identifiant unique du composant 12 (UID) ou celui (TID) du transpondeur 10.

En aval de cette lecture d'identifiant (en 23 sur la figure 4), est ici effectuée la lecture d'un marqueur 32, 33 ou 34 de détection du type de transpondeur 10. Cette lecture détermine le type de transpondeur 10 à authentifier, par exemple de configuration (marqueur 32), d'échange de clés (marqueur 33) ou pour un simple utilisateur (marqueur 34).

Ces marqueurs lus sont e.g. :
- TEC = marqueur 33 d'un transpondeur 10 d'échange de clés enregistré sous la forme : 0x381B ;
- TC = marqueur 32 d'un transpondeur 10 de configuration, enregistré sous la forme : 0x8E05 ; et
- TU = marqueur 34 d'un transpondeur 10 pour utilisateur, enregistré sous la forme : 0xD159.

Ceci fait correspondre à un transpondeur de tel ou tel type, des droits spécifiques. Ainsi, le porteur d'un transpondeur 10 de configuration est une personne habilitée de l'entretien de l'installation. Tandis que le porteur d'un transpondeur 10 d'échange de clés est un responsable de la sécurité de l'installation 1.

Intervient également dans la procédure d'authentification 21, la lecture 25 d'un condensat d'authentification sous la forme d'un code d'authentification de message, obtenu par hachage des données utiles en fonction d'une clé secrète d'authentification. Cette lecture 25 est effectuée par le lecteur 9 dans la zone mémoire du composant passif 12.

Puis la procédure d'authentification prévoit la comparaison des valeurs lues et déchiffrées des marqueurs et condensats.

Si cette procédure d'authentification 21 est validée par le lecteur 9 ou par le système 14 (via le lecteur 9), l'installation 1 autorise une lecture des données confidentielles dans la zone mémoire du transpondeur 10.

Ces données confidentielles ont été obtenues à l'aide d'une clé d'encryption 18 secrète, de longueur tronquée et d'une valeur générée (aléatoire ou code saisi).

Puis est ensuite opéré le décryptage 20 des données utiles. Notons que sur l'exemple de la figure 4, la transaction (ici de lecture mais ceci s'applique également aux configurations et échanges de clés) comporte une interrogation du transpondeur 10 quant à son aptitude à être sécurisé selon l'invention.

Si tel n'est pas le cas (N), l'invention prévoit la possibilité de mettre en place une transaction non sécurisée (29), par exemple avec des transpondeurs 10 compatibles mais non conformés selon l'invention.

Cette possibilité est scrutée par l'interrogation 27, qui dans le cas d'une affirmative (Y), lis en 28 à nouveau le code produit et / ou celui du transpondeur pour pouvoir procéder à l'envoi (via le lecteur 9) des informations utilisables.

On a vu que préalablement à la procédure d'authentification 22, le hachage du code d'authentification de message est produit (en dehors du transpondeur 10) à l'aide d'une signature réduite sensiblement aux 10 à 20 premiers octets, par exemple selon les normes HMAC (FIPS198) et SHA-1 (FIPS180-2), et est suivi par l'enregistrement en zone mémoire du transpondeur 10 du condensat correspondant.

Tandis que la procédure de décryptage 20 recourt à un encryptage avancé avec une clé d'encryption de longueur limitée à 16 à 32 octets qui possède au moins six à douze octets communs avec ceux de la clé d'authentification.

Typiquement, ici la procédure de décryptage 20 comporte une étape de substitution non linéaire de bits, puis une étape de transposition de rangées, suivie par une étape de mélange de colonnes et une étape ultérieure de combinaison de bits, par exemple selon la norme AES (FIPS197).

La procédure de décryptage 20 comporte en outre une étape de subdivision en blocs d'un message à identifier issu du transpondeur, chaque bloc étant ensuite encrypté séparément en formant un dictionnaire de codes.

Ce chiffrage est opéré sans vecteur initial et avec ajout d'au moins une valeur générée 19 suite à l'étape de subdivision.

Cette valeur générée 19 est obtenue à partir des valeurs d'un compteur, est encryptée conjointement au bloc. Par exemple la valeur générée 19 est comme on l'a vu (au moins un) octet aléatoire issu de l'horloge matérielle du composant passif 12.

Dans un exemple, la valeur est un code secret tel que saisi par un utilisateur porteur d'un transpondeur 10.

Dans l'exemple de la figure 1, l'invention est destinée à assurer une sécurisation dans le cadre d'une application : de contrôle d'accès, afin d'autoriser ou interdire un accès à un véhicule comme dans le cas d'un télépéage.

Mais d'autres applications de l'invention sont possibles, notamment dans le domaine de la traçabilité d'objets critiques, par exemple de biens de valeurs. Ceci s'applique tout particulièrement à la fabrication ou au transport de produits de valeur.

Sur la figure 4, on voit deux autres possibilités d'emploi de la transaction sécurisée de l'invention. Il s'agit d'apporter à l'installation 1 des informations nouvelles ou spécifiques (mise à jour, modifications, etc.)

Par exemple, les procédures de déchiffrage 21 ou de décryptage 20 de la figure 4, participent à des configuration et à des échanges de clés sécurisés, opérés grâce au transpondeur 10.

Pour un échange de clés, suite au décryptage 21, est opéré une assignation 30 de nouvelles clés depuis un transpondeur 10 doté des informations nécessaires (enregistrées typiquement au préalable depuis le système 14. Cette assignation 30 est confirmée par un signal d'accord 31, sous forme sonore et/ou lumineuse par exemple.

L'installation procède à la détection du type de transpondeur (utilisateur, configuration ou d'échange de clés), successivement par : en amont les interrogations respectivement 32, 33 et 34 du transpondeur 10, pour savoir s'il est apte à fournir une configuration du lecteur 9, de nouvelles clés, ou s'il s'agit simplement d'un transpondeur 10 porté par un utilisateur (ou le véhicule 2 dans l'exemple de la figure 1).

Ceci renvoie à la suite d'opérations aboutissant aux assignation 30 et accord 31 quant aux clés, dont le détail est exposé maintenant, avant d'évoquer les configurations (si 32 est affirmatif = Y) et transactions d'utilisateur (si 32 et 33 ont des réponses négatives = N et 34 est affirmative = Y).

Afin de limiter la taille des clés dans le transpondeur 10 d'échange de clés utilisateur, une clé totale 35 (figure 3) est enregistrée selon l'invention. Comme indiqué, cette clé totale 35 regroupe de manière compactée, les clés secrètes d'authentification 17 (chiffrement / déchiffrage, e.g. selon HMAC-SHA1 ou MD5) et de confidentialité 18 (cryptage / décryptage, e.g. selon AES).

Pour l'exemple, mais cette valeur dépend d'une étape du procédé consistant à évaluer les capacités de mémoire (zone) du composant passif 12, et à déterminer d'après ces capacités les longueurs optimales de clés, condensats et autres informations à enregistrer dans le transpondeur 10.

Sur la figure 3, la clé 35 possède 20 octets, dont les « x » premiers composent la clé 17 (ici, les 10 premiers), tandis que 16 octets sont nécessaires à la clé 18. Astucieusement, les clés secrètes 17 et 18 ont été prévues pour qu'au calcul, elles présentent un certain nombre d'octets communs (K4 à K9). Ainsi, la clé 17 est écrite dans les octets K0 à K9, et la clé 18 l'est dans les octets K4 à K19.

Pour que la clé totale 35 soit transmise par une transaction sécurisée, une transaction sécurisée est mise en place.

Imaginons en nous reportant à la figure 4, qu'une première clé sécurisée (typiquement initiale à une mise à jour de l'installation 1) soit enregistrée. Cette première clé sécurisée est bien sûr connue du lecteur 9 concerné.

Si on désire remplacer la première clé sécurisée par une nouvelle clé pour que cette dernière remplace la première clé sécurisée, il est nécessaire d'obtenir une valeur générée 19 (par exemple codée sur 6 octets).

Lors de l'écriture, on procède à distance du transpondeur 10 à l'encryptage à l'aide de première clé sécurisée du couple comportant la nouvelle clé et la valeur générée.

Sont obtenues des données utiles rendues confidentielles. Ces données sont hachées toujours à l'aide de la première clé sécurisée, fournissant ainsi le condensat correspondant.

Après enregistrement via le lecteur 9, on retrouve dans le transpondeur 10 le marqueur, le condensat et les données confidentielles.

À la lecture du transpondeur 10, c'est hors de ce dernier que sont calculés et vérifiés que le hachage fournit un résultat identique à l'encryptage. Dans ce cas, on calcule le décryptage du résultat de hachage et on assigne ainsi la valeur de la nouvelle clé à la place de celle de la première clé sécurisée.

En conséquence, c'est la nouvelle clé secrète qui est rendue active dans le lecteur 9.

En ce qui concerne le transpondeur 10 lié à un objet tel qu'un véhicule ou une personne, le procédé de l'invention opère par exemple comme suit.

Débute alors de manière déportée, la procédure d'encryption, qui recourt ici à une encryption avancée avec une clé d'encryption 18 de longueur tronquée possédant dans l'exemple évoqué plus haut entre un cinquième et une moitié d'octets communs avec ceux de la clé d'authentification 17. Les données ainsi traitées correspondent aux droits et descripteurs de l'objet porteur.

Ensuite, les données encryptées sont signées par la procédure 21 d'authentification grâce à la clé 17.

A la lecture, sont transmis les marqueurs du transpondeur 10 de l'objet (utilisateur), le condensat et les données confidentielles. Et l'interrogation 34 est affirmative. Après avoir calculé l'authentification 21, on questionne en 36 par comparaison de valeurs, s'il s'agit d'un transpondeur 10 habilité.

Il en va d'ailleurs de même pour les transactions d'échange de clé et de configuration. Notons que si l'authentification 21 d'une transaction d'échange de clé s'avère négative (36 = N), est émis un signal de corruption 38 puis une indication sonore / visuelle 39 d'erreur.

En revenant aux transactions d'utilisateur, intervient alors le décryptage 20. Celui-ci fournit une transaction 37 sécurisée, apte à fournir ou réserver les données utiles, selon que le décryptage a été productif (Y) ou non (N).

Pour un transpondeur 10 de configuration, la démarche est similaire. Les données de configuration sont d'abord encryptées à l'aide de la clé privée 18 et d'une valeur 19.

Puis le résultat est signé en utilisant une nouvelle clé privée 17, résultant du hachage de la première clé. A la lecture, sont transmises les marqueurs du transpondeur 10 de l'objet (transpondeur 10 de configuration), le condensat et les données confidentielles, si l'interrogation 32 est affirmative. Après avoir calculé l'authentification 21, on questionne en 36 par comparaison de valeurs, s'il s'agit d'un transpondeur 10 habilité. Le cas échéant (36 = N), sont produits les signaux 38 et indicateurs 39.

A l'inverse, si le décryptage 20 est concluant, des données utiles telles que de nouveaux paramètres relatifs au type de composant 12, à la puissance d'émission du lecteur 9, aux conditions de sécurité (par exemple, transaction possible avec un transpondeur non sécurisé en 28 et 29), etc. sont implantées dans l'installation 1. Ceci est illustré sur la figure 4 par les assignation 40 et accord 41.

Naturellement, l'invention est sujette à de nombreuses variations quant à sa mise en oeuvre. Bien qu'un mode de réalisation ait été décrit, on comprend que tous moyens équivalents peuvent entrer dans le cadre de l'invention.

## Revendications

1. Procédé de sécurisation de transaction radiofréquence UHF/SHF, au sein d'une installation (1) comportant au moins : un transpondeur (10) couplé à un objet (2) à identifier et un lecteur (9) apte à opérer la transaction ; ce dernier étant pourvu d'un composant passif (12) dont la zone mémoire est à lecture libre ; ce procédé comporte une procédure d'authentification (21) du transpondeur (10), suivie d'une procédure de décryptage (20) de données utiles de la zone mémoire,
**caractérisé en ce que** ces procédures d'authentification et de décryptage (20) impliquent exclusivement pour l'objet (2) ledit composant passif (12) et sont déportées via le lecteur (9) ; la procédure d'authentification (21) prévoit d'abord la lecture dans la zone mémoire d'un marqueur propre au composant passif (12) d'une part, et d'autre part la lecture d'un condensat d'authentification sous la forme d'un code d'authentification de message, obtenu par hachage des données utiles en fonction d'une clé (17) secrète d'authentification ; puis la procédure d'authentification (21) prévoit comparaison des valeurs lues des marqueurs et condensats ; si cette procédure d'authentification (21) est validée par le lecteur (9), celui-ci autorise une lecture des données confidentielles obtenues à l'aide d'une clé (18) d'encryption secrète de longueur tronquée et d'une valeur générée (19), puis opère le décryptage (20) des données utiles.

2. Procédé selon la revendication 1,
**caractérisé en ce que** les procédures d'authentification (21) et de décryptage (20) déportées via le lecteur (9) comportent respectivement des chiffrage et encryptage; un encodage préalable de transpondeur (10) pour la configuration d'un lecteur (9) et / ou d'échange de clés (17, 18, 35), est opéré par un système (14) informatique.

3. Procédé selon la revendication 1 ou 2,
**caractérisé en ce que** la lecture dans la procédure d'authentification (21) comporte celle d'un marqueur (32, 33, 34) de détection du type de transpondeur (10) par exemple de configuration, d'échange de clés ou pour utilisateur, et celle d'un identifiant unique (UID / TID) et / ou code électronique (EPC) propre au comportant passif (12), par exemple en amont de celle du marqueur (32, 33, 34).

4. Procédé selon l'une des revendications 1 à 3,
**caractérisé en ce que** préalablement à la procédure d'authentification (21), le hachage du code d'authentification de message est produit à l'aide d'une signature réduite sensiblement aux 10 à 20 premiers octets, par exemple selon les normes HMAC (FIPS198) et SHA-1 (FIPS180-2), et est suivi par l'enregistrement en zone mémoire du transpondeur (10) du condensat correspondant.

5. Procédé selon l'une des revendications 1 à 4,
**caractérisé en ce que** la procédure de décryptage (20) recourt à un encryptage avancé avec une clé d'encryption de longueur limitée à 16 à 32 octets qui possède au moins six à douze octets communs avec ceux de la clé d'authentification.

6. Procédé selon l'une des revendications 1 à 5,
**caractérisé en ce que** la procédure de décryptage comporte une étape de subdivision en blocs d'un message à identifier issu du transpondeur (10), chaque bloc (44) étant ensuite encrypté séparément en formant un dictionnaire de codes, ce chiffrage étant opéré sans vecteur initial et avec ajout d'au moins une valeur générée (19) suite à l'étape de subdivision, cette valeur générée (19) étant encryptée conjointement au bloc et est au moins un octet aléatoire.

7. Procédé selon l'une des revendications 1 à 6,
**caractérisé en ce que** la procédure de décryptage (20) comporte une étape de substitution non linéaire de bits, puis une étape de transposition de rangées, suivie par une étape de mélange de colonnes et une étape ultérieure de combinaison de bits, par exemple selon la norme AES (FIPS197).

8. Procédé selon l'une des revendications 1 à 7,
**caractérisé en ce que** ce procédé est destiné à assurer une sécurisation dans le cadre d'une application : de contrôle d'objets (2), par exemple afin d'autoriser ou interdire un accès, par exemple dans le domaine de l'accès de personnes à un lieu donné ou de véhicules comme dans le cas d'un télépéage ; et/ou de traçabilité d'objets critiques, par exemple de biens de valeurs, par exemple dans le domaine de la fabrication ou du transport de produits de valeur ; et/ou de configuration (25-40,41) d'une installation (1) d'identification de manière sécurisée, par exemple dans les domaines précédents.

9. Transpondeur (10) RFID apte à mettre en oeuvre le procédé d'identification selon l'une des revendications 1 à 8,
**caractérisé en ce qu'**il (10) est compatible avec la norme ISO18000-6 ou la norme EPC1 GEN2 qui définissent des paramètres de communication UHF d'une interface d'air entre 860 MHz et 960 MHz.

10. Transpondeur (10) selon la revendication 9,
**caractérisé en ce qu'**il (10) est contenu dans un boîtier, et est destiné à l'identification d'un véhicule (2) à travers une surface vitrée (3), ce transpondeur (10) comportant une antenne (11) et un composant (12) disposés sur un substrat (13) commun, de manière qu'en utilisation l'antenne (11) soit disposée à une distance sensiblement comprise entre 5 et 16 millimètres de la surface vitrée (3) qui est alors interposée entre le transpondeur (10) et un lecteur (9) compatible.

11. Installation (1) RFID-UHF d'identification sécurisée apte à mettre en oeuvre le procédé d'identification selon l'une des revendications 1 à 8,
**caractérisée en ce que** cette installation (1) RFID comporte au moins l'un de chacun des éléments suivants : un transpondeur (10) tel qu'étiquette ou badge, destiné à être rendu solidaires d'un objet (2) à identifier ; un lecteur (9) apte à opérer des transactions sécurisées en lecture et / ou écriture avec ce transpondeur (10) ; et un système (14) informatique, tel que serveur ou plateforme, équipé de logiciels d'application par exemple de gestion de contrôles, d'identifications, de traçabilité, de comptage ou analogues.
